# EUROPÄISCHE PATENTANMELDUNG

(11) **EP 1 231 400 A2**
(43) Veröffentlichungstag der Anmeldung: **14.08.2002**
(21) Anmeldenummer: 01128570.7
(22) Anmeldetag: 30.11.2001
(51) Int. Cl.: F16D 65/095, F16D 69/04

(54) **Belagvorrichtung für eine Scheibenbremse**

(30) Priorität: 10.02.2001 DE 10106178
(71) Anmelder: Dr.Ing. h.c.F. Porsche Aktiengesellschaft, 70435 Stuttgart (DE)
(72) Erfinder: von Sivers, Rolf, 71287 Weissach-Flacht (DE); Thomas, Claus, 71686 Remseck-Pattonville (DE)

(57) **Zusammenfassung**

Diese Belagvorrichtungen eignen sich für eine Scheibenbremse mit einer Bremsscheibe, vorzugsweise für ein Kraftfahrzeug. Die Bremsscheibe umfasst konkave Bremsscheibenflächen, die mit konkaven Belagflächen der Belagvorrichtungen zusammenarbeiten. Jede Belagvorrichtung weist einen Belagkörper mit einer konvexen Belagfläche und einen nach Art einer Platte ausgeführten Belagträger mit einer planen Tragfläche für den Belagkörper auf.

Zur Erzielung einer definierten Verschleißdicke des Belagkörpers ist zwischen der konvexen Belagfläche und der Tragfläche des Belagkörpers eine Einrichtung zur Optimierung des Reibvolumens des Belagkörpers vorgesehen.

## Beschreibung

Die Erfindung betrifft Belagvorrichtungen für ein Scheibenbremse mit einer Bremsscheibe, vorzugsweise für ein Kraftfahrzeug nach dem Oberbegriff des Patentanspruchs 1.

Eine bekannte Belagvorrichtung, GB 1 586 465, weist einen Belagkörper auf, der an einer Tragfläche eines Belagträgers in Lage gehalten ist. Sowohl die Tragfläche wie auch ein Belagfläche des Belagkörpers, die einer Bremsscheibenfläche einer Bremsscheibe zugekehrt ist, sind als Ebenen ausgeführt.

Die DE 198 37 166 A1 zeigt eine Scheibenbremse mit einer Bremsscheibe, die mit konkaven Bremsscheibenflächen versehen ist. Mit den konkaven Bremsscheibenflächen arbeiten konvexe Belagflächen von Belagkörpern zusammen, die in Verbindung mit Belagkörpern Belagvorrichtungen bilden. Jeder Belagkörper ist mit einer ebenen Tragfläche des zugehörigen Belagträgers verbunden. Dank der konkaven Belagflächen bzw. konvexen Belagflächen werden störende Geräusche z. B. bei Auslaufbremsungen - Fußgängerüberweg, Verkehrsampeln - eines mit derartigen Bremsen versehenen Kraftfahrzeuges deutlich reduziert. Allerdings ist die Verschleißdicke der Belagkörper aufgrund der konvexen Gestalt der Belagflächen minimiert, was die Betriebszeit oder Lebensdauer der Belagvorrichtungen beeinträchtigt.

Aufgabe der Erfindung ist es daher, an den Belagvorrichtungen solche Vorkehrungen zu treffen, dass trotz konvexen Belagflächen die Belagvorrichtungen eine übliche Standfestigkeit aufweisen.

Erfindungsgemäß wird diese Aufgabe durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass die Einrichtung zur Optimierung des Reibvolumens des Belagkörpers dazu beiträgt, dass die Betriebsdauereigenschaften jeder eine konvexe Belagfläche aufweisenden Belagvorrichtung nicht eingeschränkt ist. Dabei lässt sich die durch eine Erweiterung bzw. eine Verdickung des Belagträgers gebildete Einrichtung, die zu einem definierten Reibvolumen beiträgt, leicht verwirklichen. Dadurch, dass die Verdickung durch zwei aneinander liegende Einzelplatten gebildet wird, trägt die Fügestelle der Einzelplatten zur gezielten Dämpfung bei. Schließlich lässt sich der Belagträger, ob er mehrteilig oder einteilig ist mit in der Technik bekannten Verfahren herstellen.

In der Zeichnung wird ein Ausführungsbeispiel der Erfindung gezeigt, das nachstehend näher beschrieben ist.

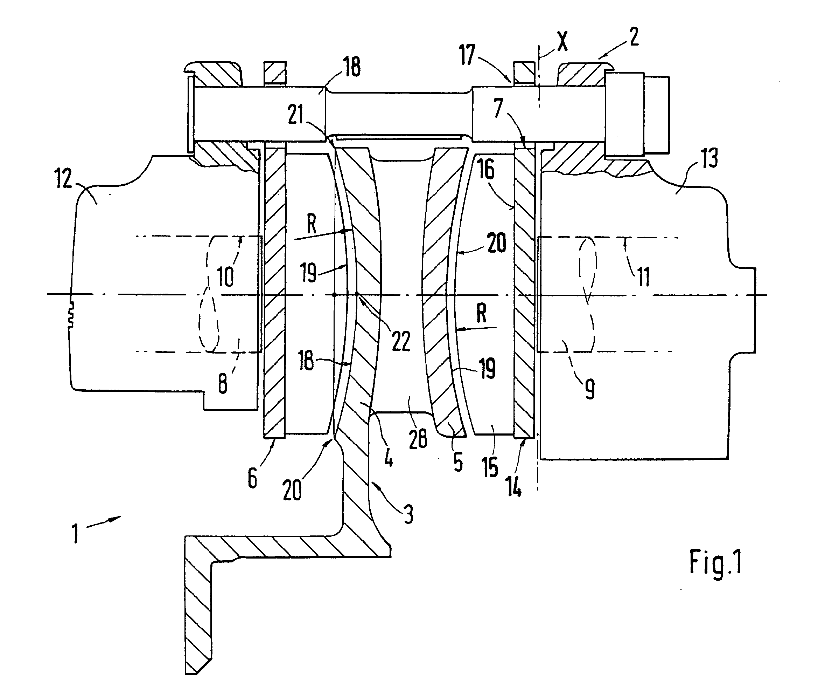

Es zeigen
- Fig. 1: eine Seitenansicht einer Scheibenbremse mit einer Bremsscheibe und einem Bremssattel mit Belagvorrichtungen gemäss der DE 198 37 166 A1,
- Fig. 2: eine Einzelheit X der Fig. 1 mit einer ersten Ausführungsform einer Belagvorrichtung nach der Erfindung,
- Fig. 3: eine Ansicht entsprechend Fig. 2 mit einer zweiten Ausführungsform einer Belagvorrichtung nach der Erfindung.

Eine Scheibenbremse 1, die z.B. in ein Straßenfahrzeug, ein Schienenfahrzeug, ein Flugzeug oder dergl. eingebaut sein kann, umfasst einen Bremssattel 2 und eine Bremsscheibe 3 mit gegenüberliegenden Reibringhälften 4,5. Der Bremssattel 2 ist als sogenannter Festsattel ausgeführt, der beiderseits der Bremsscheibe 3 schwimmend gelagerte Belagvorrichtungen 6,7 aufweist. Letztere sind mittels Kolben 8,9 beaufschlagbar. Die Kolben sind axial beweglich in Bohrungen 10,11 von Sattelgehäusen 12,13 gelagert. Jede Belagvorrichtung z.B. 7 umfasst einen nach Art einer Platte ausgeführten Belagträger 14 und einen Belagkörper 15, die fest miteinander verbunden sind, und zwar an einer Tragfläche 16 des Belagträgers 14. Der Belagträger 14 ist mit einer Bohrung 17 versehen, die einen Lagerbolzen 18 umgibt. Auf letzterem ist die Belagvorrichtung 7 verschiebbar gelagert, d.h. in dessen axialer Richtung.

Die Bremsscheibe 3 weist auf der der Belagvorrichtung 7 zugekehrten Seite, gemeint ist an der Reibringhälfte 4, eine konkave Bremsscheibenfläche 19 auf. Eine der Bremsscheibenfläche 19 benachbarte Bremsbelagfläche 20 der Belagvorrichtung 7 korrespondiert mit besagter Bremsscheibenfläche 19 und ist folglich konvex ausgebildet. Die Konkavität der Bremsscheibenfläche 19 bzw. Konvexität der Bremsbelagfläche 20 wird durch den Radius R bestimmt.

Zwischen der Tragfläche 16 des Belagträgers 14 und der Bremsbelagfläche 20 ist eine Einrichtung 21 zur Optimierung eines Reibvolumens 22 der Belagvorrichtung 6 vorgesehen. Die Einrichtung 21 ist durch wenigstens eine örtlich ausgebildete Erweiterung 23 des Belagkörpers 14 dargestellt, wobei die Erweiterung 23 sich von der Tragfläche 16 weg in Richtung zur Bremsbelagfläche 20 hin erstreckt.

Die Erweiterung 23 ist Bestandteil einer örtlichen Verdickung 24, die innerhalb von einer ersten Begrenzung 25 und einer zweiten Begrenzung 26 der Belagvorrichtung 6 vorgesehen ist. Die Begrenzungen 25,26 verlaufen quer zu einer Konstruktionslinie 27, die sich in radialer Richtung A-A der Reibringfläche 4 erstreckt. Durch diese Konfiguration des Belagträgers 14 ist eine Dicke I in einem Bereich 28 des Kolbens 9 größer als > beispielsweise als Dicken II in den Bereichen 29,30 der Begrenzungen 25,26, was durch die Beziehung Dicke I > Dicken II verdeutlicht wird. Dabei gehen die Dicke I und die Dicken II von einer ebenen Rückseite 31 des Belagträgers 14 aus, die mit Abstand zur Tragfläche 16 verläuft. Dank der örtlichen Verdickung 24 wird die geometriebedingte Konvexität Kv der Bremsbelagfläche 20, die an die Konkavität der Bremsscheibenfläche angepasst ist, zu Gunsten einer optimierten Verschleißdicke ausgeglichen.

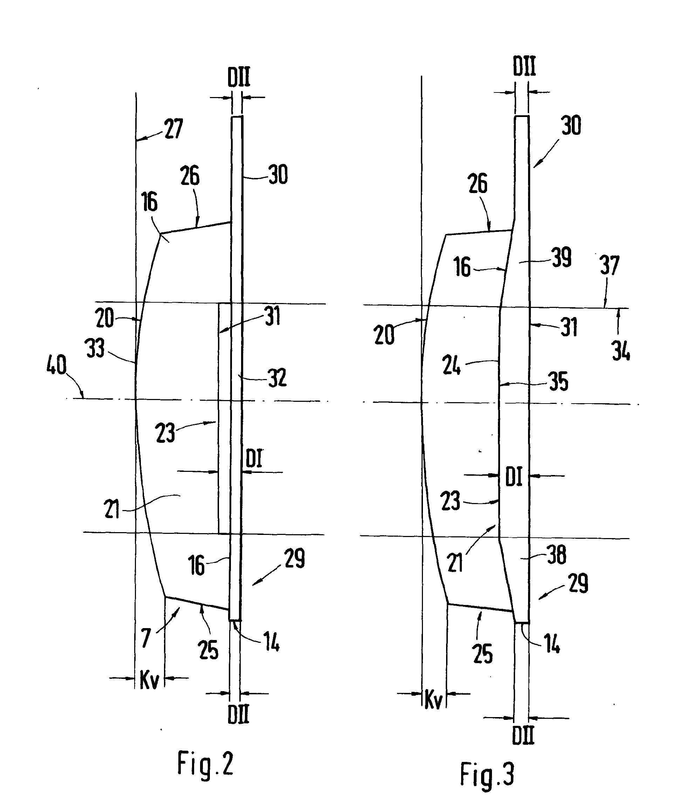

Gemäss Fig. 2 wird die Verdickung 24 durch wenigstens zwei Einzelplatten 32 und 33 gebildet, die aneinander liegen, stoffschlüssig miteinander verbunden sind und im Ausführungsbeispiel gleiche Dicken aufweisen. Denkbar ist aber auch die beiden Einzelplatten 32 und 33 mit unterschiedlichen Dicken zu versehen.

In Fig. 3 folgt die Form der Tragfläche 16 in etwa dem Verlauf der konkaven Bremsscheibenfläche 20. Dabei ist die Tragfläche 16 in einem mittleren Tragflächenbereich 34 als ein Ebenenabschnitt 35 ausgeführt, an dessen Enden 36,37 der Belagträger 14 mit Verjüngungen 38,39 versehen ist. Schließlich kann der Belagträger 14 beiderseits einer Mittellängsebene 38, die eine Mittellängsebene des Kolbens 40 einschließt, symmetrisch ausgeführt sein

## Patentansprüche

1. Belagvorrichtungen für eine Scheibenbremse mit einer Bremsscheibe, vorzugsweise für ein Kraftfahrzeug, welche Bremsscheibe konkave Bremsscheibenflächen umfasst, die mit konvexen Belagflächen der Belagvorrichtungen zusammenarbeiten, wobei jede Belagvorrichtung einen Belagkörper mit einer konvexen Belagfläche und einen nach Art einer Platte ausgeführten Belagträger mit einer planen Tragfläche für den Belagkörper aufweist, **dadurch gekennzeichnet, dass** zwischen der konvexen Belagfläche (20) des Belagkörpers (15) und der Tragfläche (16) des Belagträgers (14) eine Einrichtung (21) zur Optimierung des Reibvolumens (21) des Belagkörpers (15) vorgesehen ist.

2. Belagvorrichtungen nach Anspruch 1, **dadurch gekennzeichnet, dass** die Einrichtung (21) durch eine zumindest örtlich vorgesehene und in Richtung Belagfläche (20) verlaufende Erweiterung (22) des Belagträgers (14) gebildet wird.

3. Belagvorrichtungen nach Anspruch 2, **dadurch gekennzeichnet, dass** die Erweiterung (22) eine Verdickung (23) ist, die durch beispielsweise zwei aneinanderliegende Einzelplatten (31,32) gebildet wird.

4. Belagvorrichtungen nach Anspruch 3, **dadurch gekennzeichnet, dass** die Einzelplatten (31,32) beispielsweise stoffschlüssig miteinander verbunden sind.

5. Belagvorrichtungen nach Anspruch 3, **dadurch gekennzeichnet, dass** die Einzelplatten (31,32) gleiche Dicken aufweisen.

6. Belagvorrichtungen nach Anspruch 3, **dadurch gekennzeichnet, dass** die Einzelplatten (31,32) unterschiedliche Dicken aufweisen.

7. Belagvorrichtungen nach den Ansprüchen 1 und 2, **dadurch gekennzeichnet, dass** die Form der Tragfläche (16) des Belagträgers (14) in etwa an den Verlauf der konvexen Reibbelagfläche (20) angepasst ist.

8. Belagvorrichtung nach Anspruch 7, **dadurch gekennzeichnet, dass** Form der Tragfläche (16) in einem mittleren Tragflächenbereich (34) als ein Ebenenabschnitt (35) ausgeführt ist, der von Verjüngungen (38,39) begrenzt wird.
